# EUROPÄISCHE PATENTSCHRIFT

(11) **EP 3 243 678 B1**
(45) Veröffentlichungstag und Bekanntmachung des Hinweises auf die Patenterteilung: **07.04.2021**
(21) Anmeldenummer: 17000801.5
(22) Anmeldetag: 10.05.2017
(51) Int. Cl.: B60J 7/16, B60P 7/08, B60J 5/06

(54) **NUTZFAHRZEUGAUFBAU**
COMMERCIAL VEHICLE STRUCTURE
CARROSSERIE DE VÉHICULE UTILITAIRE

(30) Priorität: 12.05.2016 DE 102016108827
(43) Veröffentlichungstag der Anmeldung: 15.11.2017
(73) Patentinhaber: Fahrzeugwerk Bernard Krone GmbH & Co. KG, 49757 Werlte (DE)
(72) Erfinder: MENKE, Ansgar, D-49757 Werlte (DE); SINGER, Mario, D-49832 Freren (DE)
(74) Vertreter: Pott, Ulrich

(56) Entgegenhaltungen:
- EP-A1- 2 835 282
- DE-A1-102014 104 428
- GB-A- 2 327 450
- US-A- 4 795 208
- US-A- 4 861 094
- US-A1- 2006 078 398

## Beschreibung

Die Erfindung bezieht sich auf einen Nutzfahrzeugaufbau gemäß dem Oberbegriff des Patentanspruches 1.

Nutzfahrzeugaufbauten der eingangs genannten Art mit Ladungssicherungselementen und Anordnungen sind in vielfältiger Ausgestaltung bekannt. So ist es beispielsweise bekannt, am Fahrzeug z. B. zwischen Fahrzeugrungen Einsteckbretter vorzusehen oder Kombibefestigungsschienen, die jeweils mit Ausschnitten versehen sind, um darin sich quer zum Laderaumboden erstreckende Sperrbalken, Gurte, Wandelemente und dergleichen zu befestigen. Des Weiteren ist bekannt, an seitlichen Befestigungsschienen des Laderaumbodens Sperrbalken festzulegen, an denen sich wiederum parallel zur Fahrtrichtung, aber auch diagonal zur Längsmittelachse eines Nutzfahrzeugaufbaus Spanngurte befestigen lassen. Ebenfalls ist es bekannt, in den Laderaumboden Befestigungslöcher einzulassen, in die aufrecht stehende Stützstangen hineinzustecken sind.

Nachteilig bei all diesen Ladungssicherungsanordnungen und Ladungssicherungssystemen zur rückwärtigen Ladungssicherung ist, dass diese eine bestimmte Art eines Nutzfahrzeugaufbaus vorsehen, um beispielsweise Einsteckbretter vorsehen zu können. An Nutzfahrzeugaufbauten, die verschiebbare Seitenplanen haben, können solche Einsteckbretter vorgesehen sein, aber aufgrund der aufwendigen Handhabung, des zusätzlichen Gewichts und der zusätzlich notwendigen Vorrichtungen zur Anbringung sind diese Einsteckbretter unerwünscht.

Sollen vertikal aufragende Stützstangen eingebracht werden, ist der Laderaumboden in baulich aufwendiger Weise mit entsprechenden Befestigungsschienen auszubilden, die mit Abstand zueinander in den Laderaumboden einzulassen sind. Dies ist ebenfalls aufwendig.

Aus der US 4,795,208 A, der DE 10 2014 104 428 A1 sowie der US 4,861,094 A sind Nutzfahrzeugaufbauten der eingangs genannten Art bekannt. Die aus diesen Dokumenten bekannten Nutzfahrzeugaufbauten haben alle den Nachteil, dass Ladungssicherungselemente mit einem erhöhten Bauaufwand herzustellen sind und darüber hinaus sich nicht ohne weiteres mit Befestigungsaufnahmen einer Befestigungsschiene verbinden lassen.

Aus der EP 2 835 282 A1 ist ein Nutzfahrzeugaufbau mit verschiebbarer Ladungssicherungseinrichtung bekannt, bei der sich an einem Außenbaum die Ladungssicherungseinrichtung zum Anbringen eines Sicherungsmittels erstreckt. An dem Außenbaum ist ein Schlitten zum Verschieben der Ladungssicherungseinrichtung entlang des Holmes gehalten. Dabei kann in einer bestimmten Betriebsstellung das Ladungssicherungselement nicht festgestellt werden.

Es ist Aufgabe der vorliegenden Erfindung, in baulich einfacher Weise eine Ladungssicherung vorzusehen, die in handhabungstechnisch einfacher Weise von einer Bedienperson am Nutzfahrzeugaufbau vorgesehen und in einer gewählten Position festgestellt werden kann.

Zur Lösung dieser Aufgabe zeichnet sich der Nutzfahrzeugaufbau der eingangs genannten Art dadurch aus, dass das Ladungssicherungselement an der Befestigungsaufnahme des Außenbaumes über ein Verriegelungselement feststellbar ist, wobei das Verriegelungselement als Klemmbremse ausgebildet ist.

Damit ist eine Ladungssicherungsanordnung für einen Nutzfahrzeugaufbau geschaffen, die mit nur wenigen Handgriffen im Bedarfsfall zur Ladungssicherung vorgesehen werden kann. Das Ladungssicherungselement dieser Ladungssicherungsanordnung erstreckt sich in einfacher Weise von der Befestigungsschiene hin bis zum oberen Außenbaum, der nur dahingehend in baulicher Weise erweitert werden muss, dass er seinerseits eine entsprechende Befestigungsaufnahme für dieses Ladungssicherungselement aufweist.

Dabei kann dieses Ladungssicherungselement beispielsweise als Spanngurt ausgebildet sein mit einem entsprechenden hakenförmigen Verbindungselement, um in entsprechende Aufnahmen der Befestigungsschiene am Laderaumboden eingesetzt zu werden. Diese Befestigungsschiene kann wie in herkömmlicher Weise als den Laderaum seitlich begrenzende metallische Leiste ausgebildet sein, die viele mit Abstand zueinander angeordnete Befestigungsöffnungen aufweist, in die ein Befestigungshaken einzubringen ist. Das Ladungssicherungselement seinerseits als vertikale Verbindung kann z. B. als Gurt ausgebildet sein aber auch als ein Profil, beispielsweise aus einem metallischen oder nichtmetallischem Werkstoff oder aus einem glas- oder kohlenstofffaserverstärkten Kunststoff, sei es als Rechteckprofil oder auch z. B. als Oval- oder Rundprofil. Die Festlegung des Ladungssicherungselements am Nutzfahrzeugaufbau bedeutet, dass dieses nicht zwangsläufig in seiner Einbaulage fest verspannt sein muss. Eine Verspannung ist beispielsweise bei formsteifen Profilen nicht zwingend erforderlich. Auch Gurte müssen nicht zwingend fest gespannt sein. Die Verbindung des Ladungssicherungselements muss vielmehr nur so ausgeführt sein, dass sich im Sicherungsfall eine kraft- und/oder formschlüssige Verbindung des Ladungssicherungselements mit dem Nutzfahrzeugaufbau einstellt. Deshalb ist auch eine Montage mit einem gewissen Spiel im Ladungssicherungselement selbst und/oder in der Verbindungstechnik möglich. Dafür sind dem Fachmann eine Vielzahl möglicher Lösungen aus der Verbindungstechnik bekannt.

Das Ladungssicherungselement kann an einer Befestigungsaufnahme des Außenbaums über ein Verriegelungselement festgestellt werden. Dabei ist dieses Verriegelungselement als Klemmbremse ausgebildet, das mit nur geringem handhabungstechnischem Aufwand in der Geräteposition festzustellen ist. Das Verriegelungselement kann zudem auch noch ein Riegel- oder Rastelement aufweisen, das in eine vorgegebene Verriegelung oder Rastung einrastet. Die Riegelaufnahmen oder die Rastung kann sich in Längsrichtung des Außenbaumes über einen kürzeren oder längeren Abschnitt erstrecken, so dass das Ladungssicherungselement in verschiedenen Positionen feststellbar ist, wodurch und sich eine hohe Variabilität des Systems ergibt.

Dieses Ladungssicherungselement kann durch ein zweites Spannelement, beispielsweise einen Spanngurt, mit der Befestigungsschiene verspannt werden. Zusätzliche Spannelemente sind insbesondere dann vorteilhaft, wenn das Ladungssicherungselement nicht kraft- und/oder formschlüssig mit dem Außenbaum verbunden ist. Die Spannelemente können dann zusätzlich die Ladungssicherungskräfte in und/oder gegen die Fahrtrichtung aufnehmen. Die Spannelemente können mit der Befestigungsschiene im unteren Bereich des Fahrzeugaufbaus, dem im oberen Bereich des Fahrzeugaufbaus angeordneten Außenbaum, einer arretierbaren Mittelrunge und/oder der Dachkonstruktion verbunden sein.

Bevorzugtermaßen ist es so, dass die Befestigungsaufnahme in dem Außenbaum als Führungseinrichtung ausgebildet ist. Als eine Führungseinrichtung kann beispielsweise eine Laufkammer oder eine Laufschiene dienen. Dazu können mehrere Führungseinrichtungen vorgesehen sein, die abschnittweise oder auch durchgehend vorhanden sind. Ein Laufwagen mit z. B. einer oder zwei Laufrollen oder einem rollenlosen Gleitelement kann beispielsweise über die gesamte Längserstreckung des Führungselements entlang bewegt werden, so dass das Ladungssicherungselement an beliebiger Stelle des Außenbaumes platziert werden kann. Wird dann das Ladungssicherungselement mit der Befestigungsaufnahme der Befestigungsschiene verbunden, kann über das Spannelement das Ladungssicherungselement beispielsweise über den Außenbaum verspannt werden. Dabei erstreckt sich vorzugsweise das Spannelement in diagonaler Ausrichtung zur einer Befestigungsaufnahme der Befestigungsschiene, die einen bestimmten Abstand aufweist zu der Befestigungsaufnahme, in die das Ladungssicherungselement eingehakt ist. Die Mittelrunge als Ladungssicherungselement kann dabei form- und/oder kraftschlüssig über eine Arretierung mit dem Nutzfahrzeugaufbau verbunden sein. Das Spannelement kann dabei beliebig so ausgestaltet sein, dass es Ladungssicherungskräfte aufzunehmen vermag. Dazu kann es als Spanngurt, Spannseil oder Spannkette ausgebildet sein. Die Ladungssicherungskräfte vermögen aber auch formsteife Raumkörper aufzunehmen, die als ein Spannelement verwendet werden. Wegen ihrer Formsteifigkeit müssen solche Spannelemente nicht zwingend fest verspannt mit dem Nutzfahrzeugaufbau verbunden sein. Ohne eine feste Verspannung kann als ein starrer Raumkörper beispielsweise eine Spannstange als Spannelement verwendet sein. Das spannbare Spannelement kann beispielsweise über eine Spannvorrichtung wie eine Ratsche spielfrei montiert werden. Formsteife Spannelemente können auch über andere Befestigungsmittel mit dem Nutzfahrzeugaufbau verbunden sein.

Bevorzugtermaßen ist der Laufwagen derart ausgebildet, dass er noch eine Bremsvorrichtung aufweist. Diese kann so gestaltet sein, dass diese wirksam wird, und zwar automatisch, wenn über das Spannelement oder über das Ladungssicherungselement selber das Ladungssicherungselement verspannt wird.

Das Ladungssicherungselement hat seinerseits Aufnahmen, z. B. Ösen, Schlüssellochausnehmungen und dergleichen Haltevorrichtungen bzw. Befestigungsaufnahmen, um quer zur Längserstreckung des Laderaumbodens weitere Ladungssicherungselemente vorzusehen. Bevorzugt wird, dass ein derartiges sich quer zum Laderaumboden erstreckendes zusätzliches Ladungssicherungselement als Stützelement ausgebildet ist. Das kann beispielsweise ein Stützelement sein in Gestalt eines Gitternetzes aus Spanngurten, die in die entsprechenden Halter bzw. Aufnahmen an zwei gegenüberliegend angeordneten Ladungssicherungselementen anzubringen sind. Es können auch formstabile Querverbindungen wie beispielsweise metallische Querstangen eingebracht werden.

Insgesamt ist damit ein Nutzfahrzeugaufbau mit einer Ladungssicherungsanordnung zur Verfügung gestellt, die außerordentlich flexibel einsetzbar ist, jedoch vom Aufbau und damit auch Gestehungsaufwand außerordentlich einfach ist.

Zur weiteren Erläuterung wird auf weitere Unteransprüche, die nachfolgende Beschreibung und die Zeichnung verwiesen. In der Zeichnung zeigen:
- Fig. 1: ausschnittsweise ein Ausführungsbeispiel eines Nutzfahrzeugaufbaus nach der Erfindung mit Darstellung einer Befestigungsschiene im Laderaumboden, ein mit Abstand dazu angeordneter Außenbaum und eine dazwischen gelegene Ladungssicherungsanordnung;
- Fig. 2: ausschnittsweise ein Ausführungsbeispiel eines Ladungssicherungselementes mit einer ersten Möglichkeit der Anbindung an den Außenbaum;
- Fig. 3: eine zu Fig. 2 analoge Darstellung mit einem Ladungssicherungselement und einer alternativen Anbindungsmöglichkeit an den Außenbaum mit einer Bremsvorrichtung,
- Fig. 4: in einer Seitenansicht den Außenbaum mit einer weiteren alternativen Möglichkeit der Anbindung des Ladungssicherungselementes an den Außenbaum mit einer automatisch arbeitenden Bremsvorrichtung;
- Fig. 5: eine zu Fig. 1 analoge Darstellung mit einem alternativen Ausführungsbeispiel eines Ladungssicherungselementes.

In der Zeichnung sind nur die zum unmittelbaren Verständnis der Erfindung notwendigen Teile des Nutzfahrzeugaufbaus gezeigt. Übereinstimmende Teile sind in den einzelnen Figuren mit übereinstimmenden Bezugsziffern versehen.

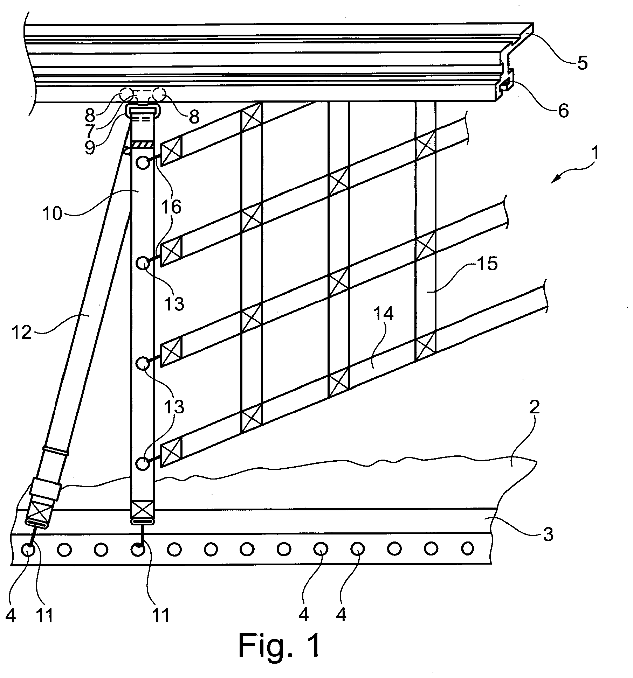

In Figur 1 ist ausschnittsweise ein Nutzfahrzeugaufbau 1 gezeigt, der einen Laderaumboden 2 aufweist, an den sich eine seitliche Befestigungsschiene 3 anschließt, die verschiedene Löcher 4 als Befestigungsaufnahmen aufweist. Der Nutzfahrzeugaufbau hat im oberen seitlichen Eckbereich einen Außenbaum 5. Zwischen dem Laderaumboden 2 und dem Außenbaum 5 können sich Seitenwände erstrecken, aber auch seitliche Schiebeplanen und dergleichen Teile, die einen Laderaum begrenzen. Oberseitig kann sich an den Außenbaum 5 ein Dach anschließen, das beispielsweise auch als aufschiebbares Planendach ausgestaltet sein kann. Der Außenbaum 5 hat seinerseits eine durchgehende Befestigungsaufnahme 6, die in dem gezeigten Ausführungsbeispiel als Laufkammer ausgebildet ist. In dieser Laufkammer 6 kann ein Laufwagen 7 mit zwei Rollen 8 ablaufen und damit verschoben werden. Dieser Laufwagen hat eine Befestigungsöse 9, an der ein Ladungssicherungselement 10 in Gestalt eines Gurtes befestigt ist. Somit ist dieser Gurt als Ladungssicherungselement 10 verschieblich an dem Außenbaum 5 befestigt. In dem dem Laderaumboden 2 zugewandten Ende des Ladungssicherungselementes ist ein Einhängehaken 11 vorgesehen, der in eine Befestigungsaufnahme 4 der Befestigungsschiene eingehakt ist. Um das Ladungssicherungselement 10 sicher zu verspannen, ist zusätzlich ein Spannelement 12 vorgesehen, das in dem Ausführungsbeispiel ebenfalls als Spanngurt ausgebildet ist und an seinem, der Befestigungsschiene 3 zugewandten Ende ebenfalls einen Befestigungshaken 11 aufweist, dass ebenfalls in eine Befestigungsaufnahme 4 der Befestigungsschiene 3 eingehakt ist. Allerdings mit einem gewissen Abstand zu dem Ladungssicherungselement 10, so dass dieser Spanngurt 12 sich in diagonaler Ausrichtung von dem Außenbaum 5 zur Befestigungsschiene 3 erstreckt. Das Ladungssicherungselement 10 hat seinerseits Ösen 13 als Befestigungselemente für sich quer oberhalb des Ladebodens 2 erstreckende Ladungsstützelemente 14 und 15, die über Haken 16 verbunden sind. Dabei bilden diese Ladungsstützelemente 14 und 15 ein Gitternetz, das sich quer über den Ladeboden 2 erstreckt. Aufgrund der Vielzahl der Befestigungsaufnahmen 4 in der Befestigungsschiene 3 und aufgrund der Ausbildung der Befestigungsaufnahme 6 in Gestalt der Laufkammer am Außenbaum 5 kann das Ladungssicherungselement 10 mit den Ladungsstützelementen 14 und 15 und dem Spannelement 12 an nahezu jeder beliebigen Stelle des Ladebodens vorgesehen sein, um Ladung in Längsrichtung des Nutzfahrzeugaufbaus abzustützen.

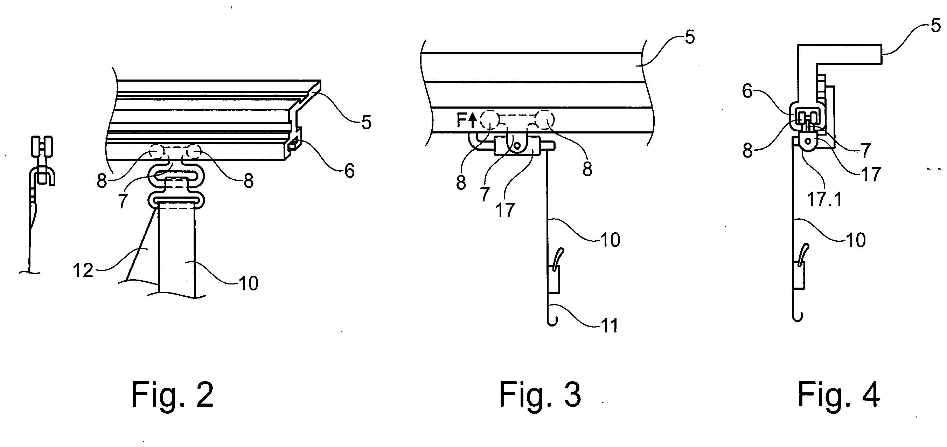

In Fig. 2 ist die Anbindung des Ladungssicherungselementes 10 am Außenbaum 5 mit der Laufkammer 6, dem Laufwagen 7, mit den Rollen 8 noch einmal näher veranschaulicht. Bei ansonsten gleichem Aufbau ist hier noch einmal eine Bremsvorrichtung 17 für den Laufwagen 7 dargestellt. Ähnlich ist auch das Ausführungsbeispiel nach Fig. 4. Hier ist die Bremsvorrichtung 17 dergestalt ausgebildet, dass bei einer Verspannung des Ladungssicherungselementes 10 ein Kopf 17.1 in einer Ausnehmung hineingedrückt wird, so dass dadurch der Laufwagen 7 gegen eine Bewegung gesichert ist.

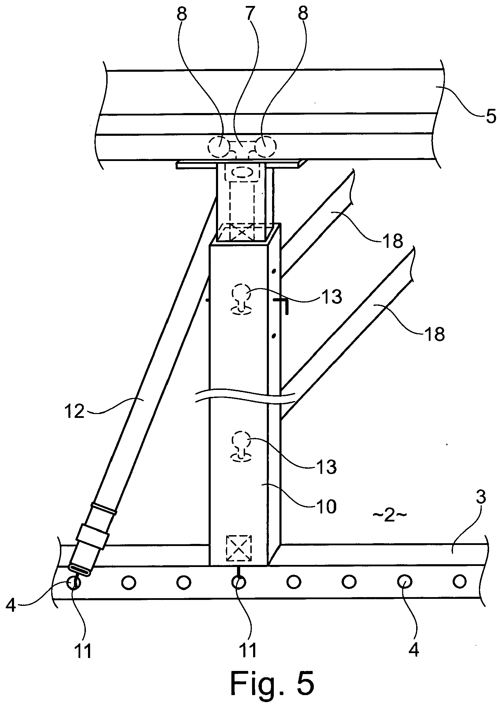

Bei ansonsten gleichem Aufbau wie das Ausführungsbeispiel nach Fig. 1 ist das Ladungssicherungselement 10 in dem Ausführungsbeispiel nach Fig. 5 als metallisches Rechteckprofil ausgebildet. Dieses metallische Rechteckprofil weist als Befestigungsaufnahmen 13 Schlüssellochlöcher auf, in die in diesem Falle metallische Querstreben 18 als Stützelemente eingebracht sind, die sich quer über den Ladeboden 2 erstrecken.

## Patentansprüche

1. Nutzfahrzeugaufbau (1) mit einem oberhalb eines Laderaumbodens (2) vorgesehenen Laderaum, wobei mit Höhenabstand zu dem Laderaumboden (2) sich in Längsrichtung des Nutzfahrzeugaufbaus (1) zu beiden Seiten des Laderaumbodens (2) erstreckend jeweils ein Außenbaum (5) vorgesehen ist und der Laderaumboden (2) jeweils mit Befestigungsaufnahmen (4) versehene Befestigungsschienen (3) aufweist, die den Laderaumboden (2) seitlich begrenzen oder in diesen eingelassen sind und mit einer Ladungssicherungsanordnung, die zumindest ein Ladungssicherungselement (10) aufweist, das an zumindest einer der Befestigungsaufnahmen (4) einer Befestigungsschiene (3) festlegbar ist, wobei ein jeweiliger Außenbaum (5) seinerseits eine Befestigungsaufnahme (6) zur Festlegung eines sich von der Befestigungsschiene (3) zu dem Außenbaum (5) erstreckenden Ladungssicherungselementes (10) aufweist, so dass sich dieses Ladungssicherungselement (10) von der Befestigungsschiene (3) zu dem mit Abstand zu dem Laderaumboden (2) vorgesehenen Außenbaum (5) erstreckt, **dadurch gekennzeichnet, dass** das Ladungssicherungselement (10) an der Befestigungsaufnahme (6) des Außenbaumes (5) über ein Verriegelungselement (17) feststellbar ist, wobei das Verriegelungselement (17) als Klemmbremse ausgebildet ist, und wobei die Klemmbremse bei Verspannung des Ladungssicherungselementes (10) mit der Befestigungsschiene (3), dem Außenbaum (5), einer arretierbaren Mittelrunge und/oder der Dachkonstruktion aus einer Außerbetriebsstellung in eine bremsende Betriebsstellung überführt wird.

2. Nutzfahrzeugaufbau (1) nach Anspruch 1, **dadurch gekennzeichnet, dass** ein jeweiliger Außenbaum (5) als Befestigungsaufnahme (6) eine sich zumindest bereichsweise entlang des Außenbaumes (5) erstreckende Führungseinrichtung aufweist, in der das Ladungssicherungselement (10) über einen Laufwagen (7) festlegbar ist.

3. Nutzfahrzeugaufbau (1) nach Anspruch 2, **dadurch gekennzeichnet, dass** der Laufwagen (7) des Ladungssicherungselementes (10) ein Gleitelement oder zumindest eine Laufrolle (8) aufweist.

4. Nutzfahrzeugaufbau (1) nach einem der Ansprüche 1 bis 3, **dadurch gekennzeichnet, dass** das Ladungssicherungselement (10) über ein zusätzliches Spannelement (12) Ladungssicherungskräfte in und/oder entgegen der Fahrtrichtung in den Nutzfahrzeugaufbau überträgt.

5. Nutzfahrzeugaufbau (1) nach Anspruch 4, **dadurch gekennzeichnet, dass** das Ladungssicherungselement (10) über das Spannelement (12) an einer weiteren Befestigungsaufnahme (4) der Befestigungsschiene (3), dem Außenbaum (5), einer arretierbaren Mittelrunge und/oder der Dachkonstruktion festlegbar ist.

6. Nutzfahrzeugaufbau (1) nach Anspruch 4 oder 5, **dadurch gekennzeichnet, dass** das das Spannelement (12) als Spanngurt, Spannseil, Spannkette oder Spannstange ausgebildet ist.

7. Nutzfahrzeugaufbau (1) nach einem der Ansprüche 4 bis 6, **dadurch gekennzeichnet, dass** das Spannelement (12) mit einer Spannvorrichtung versehen ist.

8. Nutzfahrzeugaufbau (1) nach einem der Ansprüche 1 bis 7, **dadurch gekennzeichnet, dass** das Spannelement (12) mit dem Ladungssicherungselement (10) im Bereich der Anbindung des Ladungssicherungselementes (10) an der Befestigungsaufnahme (6) des Außenbaums (5) angreift und sich in montierter Betriebsstellung in diagonaler Ausrichtung zu der Befestigungsschiene (3) des Laderaumbodens (2), dem Außenbaum (5), einer arretierbaren Mittelrunge und/oder der Dachkonstruktion erstreckt.

9. Nutzfahrzeugaufbau (1) nach einem der Ansprüche 1 bis 8, **dadurch gekennzeichnet, dass** das Ladungssicherungselement (10) gegen eine Bewegung am Nutzfahrzeugaufbau (1) festgelegt ist.

10. Nutzfahrzeugaufbau (1) nach einem der Ansprüche 1 bis 9, **dadurch gekennzeichnet, dass** das Ladungssicherungselement (10) als Spanngurt ausgebildet ist.

11. Nutzfahrzeugaufbau (1) nach einem der Ansprüche 1 bis 10, **dadurch gekennzeichnet, dass** das Ladungssicherungselement (10) als Profil ausgebildet ist.

12. Nutzfahrzeugaufbau (1) nach Anspruch 11, **dadurch gekennzeichnet, dass** das Ladungssicherungselement (10) als Rechteckprofil ausgebildet ist.

13. Nutzfahrzeugaufbau (1) nach einem der Ansprüche 1 bis 12, **dadurch gekennzeichnet, dass** das Ladungssicherungselement (10) Befestigungselemente (13) zur Anordnung von sich quer oberhalb des Ladebodens erstreckende Ladungsstützelementen (14, 15) aufweist.

14. Nutzfahrzeugaufbau (1) nach Anspruch 13, **dadurch gekennzeichnet, dass** Ladungsstützelemente (14, 15) als Stütznetz mit sich quer, diagonal und/oder vertikal zum Laderaumboden erstreckenden Gitternetzwerkelementen ausgebildet ist.

15. Nutzfahrzeugaufbau (1) nach Anspruch 1 bis 14, **dadurch gekennzeichnet, dass** das Ladungssicherungselement (10) Aufnahmen zur Anordnung von weiteren Ladungssicherungselementen (14, 15) aufweist.

16. Nutzfahrzeugaufbau (1) nach einem der Ansprüche 2 bis 15, **dadurch gekennzeichnet, dass** die Verriegelung des Laufwagens (7) über formschlüssige Verriegelungselemente erfolgt.

## Claims

1. Commercial vehicle body (1) with a cargo space provided above a cargo space floor (2), an external beam (5) being provided respectively on both sides of the cargo space floor (2) extending in the longitudinal direction of the commercial vehicle body (1) at a vertical distance from the cargo space floor (2), and the cargo space floor (2) has fixing rails (3) provided respectively with fastener receiving means (4) which laterally bound the cargo space floor (2) or are recessed therein, and with a load securing system having at least one load securing element (10) which can be secured to at least one of the fastener receiving means (4) of a fixing rail (3), a respective external beam (5) in turn having a fastener receiving means (6) for securing a load securing element (10) extending from the fixing rail (3) to the external beam (5) so that this load securing element (10) extends from the fixing rail (3) to the external beam (5) provided at a distance from the cargo space floor (2), **characterised in that** the load securing element (10) can be secured to the fastener receiving means (6) of the external beam (5) by means of a locking element (17), the locking element (17) being provided in the form of a clamping brake, and when the load securing element (10) is fastened to the fixing rail (3), to the external beam (5), to a lockable middle rung and/or to the roof construction, the clamping brake is moved from a non-operating position into a braking operating position.

2. Commercial vehicle body (1) as claimed in claim 1, **characterised in that** a respective external beam (5) has a guide mechanism extending along at least certain regions of the external beam (5) as a fastener receiving means (6) in which the load securing element (10) can be secured by means of a carriage (7).

3. Commercial vehicle body (1) as claimed in claim 2, **characterised in that** the carriage (7) of the load securing element (10) has a slide element or at least one castor (8) .

4. Commercial vehicle body (1) as claimed in one of claims 1 to 3, **characterised in that** the load securing element (10) transmits load securing forces to the commercial vehicle body in and/or opposite the direction of travel via an additional tensioning element (12).

5. Commercial vehicle body (1) as claimed in claim 4, **characterised in that** the load securing element (10) can be secured to another fastener receiving means (4) of the fixing rail (3), to the external beam (5), to a lockable middle rung and/or to the roof construction by means of the tensioning element (12).

6. Commercial vehicle body (1) as claimed in claim 4 or 5, **characterised in that** the tensioning element (12) is provided in the form of a lashing strap, lashing rope, lashing chain or clamping rod.

7. Commercial vehicle body (1) as claimed in one of claims 4 to 6, **characterised in that** the tensioning element (12) is provided with a tensioning device.

8. Commercial vehicle body (1) as claimed in one of claims 1 to 7, **characterised in that** the tensioning element (12) acts on the load securing element (10) in the region of the connection of the load securing element (10) to the fastener receiving means (6) of the external beam (5) and in the mounted operating position extends in a diagonal orientation to the fixing rail (3) of the cargo space floor (2), the external beam (5), a lockable middle rung and/or the roof construction.

9. Commercial vehicle body (1) as claimed in one of claims 1 to 8, **characterised in that** the load securing element (10) is secured to prevent a movement on the commercial vehicle body (1).

10. Commercial vehicle body (1) as claimed in one of claims 1 to 9, **characterised in that** the load securing element (10) is provided in the form of a lashing strap.

11. Commercial vehicle body (1) as claimed in one of claims 1 to 10, **characterised in that** the load securing element (10) is provided in the form of a profiled section.

12. Commercial vehicle body (1) as claimed in claim 11, **characterised in that** the load securing element (10) is provided in the form of a rectangular section.

13. Commercial vehicle body (1) as claimed in one of claims 1 to 12, **characterised in that** the load securing element (10) has fastener elements (13) for positioning load supporting elements (14, 15) extending transversely above the cargo space floor.

14. Commercial vehicle body (1) as claimed in claim 13, **characterised in that** load supporting elements (14, 15) are provided as a supporting network with grid elements extending transversely, diagonally and/or vertically with respect to the cargo space floor.

15. Commercial vehicle body (1) as claimed in claims 1 to 14, **characterised in that** the load securing element (10) has receiving means for positioning other load securing elements (14, 15).

16. Commercial vehicle body (1) as claimed in one of claims 2 to 15, **characterised in that** the carriage (7) is locked by means of positively fitting lock elements.

## Revendications

1. Carrosserie de véhicule utilitaire (1) comprenant un espace de chargement prévu au-dessus d'un plancher d'espace de chargement (2), un arbre extérieur (5) étant prévu à une distance en hauteur par rapport au plancher d'espace de chargement (2) et s'étendant dans la direction longitudinale de la carrosserie de véhicule utilitaire (1) respectivement des deux côtés du plancher d'espace de chargement (2) et le plancher d'espace de chargement (2) présente des rails de fixation (3) munis respectivement de logements de fixation (4) qui délimitent latéralement le plancher d'espace de chargement (2) ou sont encastrés dans celui-ci, et comprenant un agencement de sécurisation de charge qui présente au moins un élément de sécurisation de charge (10) qui peut être fixé à au moins un des logements de fixation (4) d'un rail de fixation (3), dans lequel un arbre extérieur (5) respectif présente à son tour un logement de fixation (6) pour la fixation d'un élément de sécurisation de charge (10) s'étendant depuis le rail de fixation (3) jusqu'à l'arbre extérieur (5) de telle sorte que cet élément de sécurisation de charge (10) s'étend depuis le rail de fixation (3) jusqu'à l'arbre extérieur (5) prévu à distance du plancher d'espace de chargement (2), **caractérisée en ce que** l'élément de sécurisation de charge (10) peut être fixé au logement de fixation (6) de l'arbre extérieur (5) par le biais d'un élément de verrouillage (17), l'élément de verrouillage (17) étant réalisé sous la forme d'un frein de blocage, et le frein de blocage étant transféré d'une position de fonctionnement extérieur dans une position de fonctionnement de freinage lors du verrouillage de l'élément de sécurisation de charge (10) avec le rail de fixation (3), l'arbre extérieur (5), un montant central de blocage et/ou la construction de toit.

2. Carrosserie de véhicule utilitaire (1) selon la revendication 1, **caractérisée en ce qu'**un arbre extérieur (5) respectif présente comme logement de fixation (6) un moyen de guidage qui s'étend au moins par zones le long de l'arbre extérieur (5) et dans lequel l'élément de sécurisation de charge (10) peut être fixé par le biais d'un chariot (7).

3. Carrosserie de véhicule utilitaire (1) selon la revendication 2, **caractérisée en ce que** le chariot (7) de l'élément de sécurisation de charge (10) présente un élément de glissement ou au moins un galet de roulement (8).

4. Carrosserie de véhicule utilitaire (1) selon une des revendications 1 à 3, **caractérisée en ce que** l'élément de sécurisation de charge (10) transmet dans la carrosserie de véhicule utilitaire, par le biais d'un élément de serrage supplémentaire (12), des forces de sécurisation de charge dans et/ou contre la direction de déplacement.

5. Carrosserie de véhicule utilitaire (1) selon la revendication 4, **caractérisée en ce que** l'élément de sécurisation de charge (10) peut être fixé, par le biais de l'élément de serrage (12), à un autre logement de fixation (4) du rail de fixation (3), à l'arbre extérieur (5), à un montant central de blocage et ou à la construction de toit.

6. Carrosserie de véhicule utilitaire (1) selon la revendication 4 ou 5, **caractérisée en ce que** l'élément de serrage (12) est réalisé sous la forme d'une sangle, d'un tendeur, d'une chaîne de tension ou d'une barre de retenue.

7. Carrosserie de véhicule utilitaire (1) selon une des revendications 4 à 6, **caractérisée en ce que** l'élément de serrage (12) est muni d'un dispositif de serrage.

8. Carrosserie de véhicule utilitaire (1) selon une des revendications 1 à 7, **caractérisée en ce que** l'élément de serrage (12) s'engage, avec l'élément de sécurisation de charge (10), au niveau de la liaison de l'élément de sécurisation de charge (10) sur le logement de fixation (6) de l'arbre extérieur (5) et s'étend dans la position de fonctionnement montée dans une orientation diagonale par rapport au rail de fixation (3) du plancher d'espace de chargement (2), à l'arbre extérieur (5), à un montant central de blocage et/ou à la construction de toit.

9. Carrosserie de véhicule utilitaire (1) selon une des revendications 1 à 8, **caractérisée en ce que** l'élément de sécurisation de charge (10) est fixé pour éviter tout mouvement sur la carrosserie de véhicule utilitaire (1).

10. Carrosserie de véhicule utilitaire (1) selon une des revendications 1 à 9, **caractérisée en ce que** l'élément de sécurisation de charge (10) est réalisé sous la forme d'une sangle.

11. Carrosserie de véhicule utilitaire (1) selon une des revendications 1 à 10, **caractérisée en ce que** l'élément de sécurisation de charge (10) est réalisé sous la forme d'un profilé.

12. Carrosserie de véhicule utilitaire (1) selon la revendication 11, **caractérisée en ce que** l'élément de sécurisation de charge (10) est réalisé sous la forme d'un profilé rectangulaire.

13. Carrosserie de véhicule utilitaire (1) selon une des revendications 1 à 12, **caractérisée en ce que** l'élément de sécurisation de charge (10) présente des éléments de fixation (13) pour agencer des éléments de support de charge (14, 15) qui s'étendent transversalement au-dessus du plancher de charge.

14. Carrosserie de véhicule utilitaire (1) selon la revendication 13, **caractérisée en ce que** des éléments de support de charge (14, 15) sont réalisés sous la forme d'un filet de support avec des éléments d'ouvrage grillagé qui s'étendent transversalement, diagonalement et/ou verticalement par rapport au plancher d'espace de chargement.

15. Carrosserie de véhicule utilitaire (1) selon la revendication 1 à 14, **caractérisée en ce que** l'élément de sécurisation de charge (10) présente des logements pour agencer d'autres éléments de sécurisation de charge (14, 15).

16. Carrosserie de véhicule utilitaire (1) selon une des revendications 2 à 15, **caractérisée en ce que** le verrouillage du chariot (7) se fait par le biais d'éléments de verrouillage par complémentarité de forme.
